# EUROPÄISCHE PATENTSCHRIFT

(11) **EP 3 023 598 B1**
(45) Veröffentlichungstag und Bekanntmachung des Hinweises auf die Patenterteilung: **29.08.2018**
(21) Anmeldenummer: 15195030.0
(22) Anmeldetag: 17.11.2015
(51) Int. Cl.: F02K 3/075, F02C 9/18

(54) **Vollintegriertes Luftleitelement**
Fully integrated air guiding element
Élément déflecteur d'air entièrement intégré

(30) Priorität: 18.11.2014 DE 102014223548
(43) Veröffentlichungstag der Anmeldung: 25.05.2016
(73) Patentinhaber: Rolls-Royce Deutschland Ltd & Co KG, 15827 Blankenfelde-Mahlow (DE)
(72) Erfinder: TODOROVIC, Predrag, 10437 Berlin (DE)
(74) Vertreter: Hoefer & Partner Patentanwälte mbB

(56) Entgegenhaltungen:
- DE-A1- 1 751 550
- DE-T2- 69 606 070
- GB-A- 760 513
- US-A- 3 646 980
- US-A- 5 351 732
- US-A1- 2013 266 448

## Beschreibung

Die Erfindung bezieht sich auf ein vollintegriertes Luftleitelement einer Fluggasturbine gemäß den Merkmalen des Oberbegriffs des Anspruchs 1.

Im Einzelnen betrifft die Erfindung ein Luftleitelement einer Fluggasturbine mit einem äußeren Gehäuse, welches mit einer Einströmöffnung versehen ist, sowie mit einem in dem Gehäuse angeordneten Strömungskanal. Derartige Luftleitelemente werden beispielsweise verwendet, um Luft aus einem durchströmten Kanal, beispielsweise dem Nebenstromkanal, zu entnehmen, um diese Luft zu anderen Zwecken, beispielsweise zur Abdichtung zu verwenden.

Ein derartiges Luftleitelement ist aus der DE 10 2009 011 635 A1 vorbekannt.

Die aus dem Stand der Technik bekannten Konstruktionen zeichnen sich durch den Nachteil aus, dass sie eine große Anzahl an einzelnen Bauteilen umfassen und dass sowohl für die Herstellung als auch für die Montage ein hoher Aufwand erforderlich ist. Dies ist bedingt durch unterschiedlichste Dichtungen, Haltelemente, Verstärkungselemente und ähnliches. Dabei ergibt sich insbesondere auch der Nachteil, dass die bisherigen Konstruktionen hinsichtlich der Zuordnung der einzelnen Bauteile aufwendig sind, insbesondere wenn sich diese durch thermische Einflüsse oder durch Schwingungen verformen oder ihre Position ändern. Um diese Effekte auszugleichen, sind große Toleranzen erforderlich, die wiederum zu Dichtungsproblemen führen. Ein weiterer Nachteil besteht in den hohen Kosten für die Herstellung und die Montage sowie in dem erheblichen Gewicht der ganzen Anordnung.

Die DE 696 06 070 T2 beschreibt eine Abdichtung zwischen einem Lufteinlass und einem Bläsergehäuse, welche in Form einer elastischen Abdichtungsvorrichtung ausgebildet ist, die eine elastische Hülse umfasst. Es erfolgt keine Fixierung an dem Bläsergehäuse.

Aus der US 2013/266448 A1 ist eine Abdichtung zwischen einem Einlaufbereich einer Triebwerksverkleidung und einem Fangehäuse vorbekannt. Diese Abdichtung ist in Form eines zylindrischen flexiblen elastischen Elements ausgestaltet.

Die DE 17 51 550 A1 offenbart eine aufblasbare Dichtung zwischen dem Einlauf eines Strahltriebwerks und einem Aufnahmering der Lufteinlaufröhre, welche in Form eines aufblasbaren Dichtrings ausgebildet ist.

Der Erfindung liegt die Aufgabe zu Grunde, ein Luftleitelement der eingangs genannten Art zu schaffen, welches bei einfachem Aufbau und einfacher, kostengünstiger Herstellbarkeit die Nachteile des Standes der Technik vermeidet und einfach in der Montage ist.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß ist somit vorgesehen, dass in der Einströmöffnung ein rohrförmiges, aus einem elastischen Material gefertigtes Zwischenelement angeordnet ist.

Das Zwischenelement verbindet erfindungsgemäß dichtend und lagejustierend den Bereich der Einströmöffnung des äußeren Gehäuses mit dem Strömungskanal, welcher rohrförmig in dem äußeren Gehäuse angeordnet ist. Durch das erfindungsgemäße elastische Zwischenelement ist es insbesondere möglich, unterschiedliche Funktionalitäten in einem Bauteil zu vereinigen, nämlich die Dichtungsfunktionalität sowie die Ausrichtung und Justierung der weiteren Bauelemente, insbesondere des Gehäuses und des Strömungskanals. Die einströmende Luft wird somit durch das erfindungsgemäße Zwischenelement zuverlässig und ohne Strömungsverlust in den Strömungskanal geleitet. Relativbewegungen zwischen dem äußeren Gehäuse und dem Strömungskanal können durch das elastische Zwischenelement ausgeglichen werden. Das Zwischenelement bildet somit ein Strömungsrohr, um die durch die Eintrittsöffnung des feststehenden äußeren Gehäuses einströmende Luft in den rohrförmigen Strömungskanal zu leiten, wobei der Strömungskanal Relativbewegungen relativ zu dem äußeren Gehäuse durchführen kann. Durch die Elastizität des Zwischenelements ist stets eine dichte Verbindung zwischen der Einströmöffnung des äußeren Gehäuses und dem Strömungskanal gewährleistet.

Durch eine geeignete Auswahl des Materials (Steifigkeit der Gummimischung) und der Wandstärken des elastischen Zwischenelements ergibt sich eine ausreichende Steifigkeit und Formbeständigkeit. Weiterhin ist es möglich, an dem Zwischenelement geeignete Dichtungen auszubilden, um sowohl den Übergang zwischen dem Zwischenelement und dem äußeren Gehäuse abzudichten, als auch um den Strömungskanal durch Ausbildung einer integrierten Dichtung dicht an das Zwischenelement anzuschließen.

Das elastische Zwischenelement kann erfindungsgemäß beispielsweise aus Gummi oder einem gummi-ähnlichen Material gefertigt werden. Es ist auf besonders einfache Weise in einer Form ausformbar und vulkanisierbar.

Besonders günstig ist es, wenn das Zwischenelement an seinem, in Strömungsrichtung vorderen Bereich, mit einer ringartigen Dichtwulst versehen ist. Diese Dichtwulst verleiht dem Einströmbereich des Zwischenelements zum einen eine ausreichende Stabilität, zum anderen ist es möglich, das Zwischenelement dauerhaft und dicht in den Einströmbereich (Einströmöffnung) des äußeren Gehäuses einzusetzen. Die Dichtwulst kann dabei erfindungsgemäß fest mit dem vorderen Randbereich des äußeren Gehäuses verbunden sein, beispielsweise durch Verkleben oder ähnliches.

An dem hinteren Endbereich des Zwischenelements ist bevorzugterweise eine ringförmige, gegen den Strömungskanal anliegende Dichtung angeordnet. Der Strömungskanal kann dabei an seinem Ende aufgeweitet oder mit einer Sicke versehen sein. Hierdurch ist es möglich, das Zwischenelement gegen die Eintrittsöffnung des Strömungskanals anzulegen und abzudichten. Die Dichtung kann erfindungsgemäß zumindest eine Dichtlippe aufweisen, es ist jedoch auch möglich, dass die Dichtung in Form eines elastischen Dichtrings ausgebildet ist. Weiterhin kann die Dichtung erfindungsgemäß entweder einstückig mit dem Zwischenelement ausgebildet sein oder in Form eines separaten Bauteils ausgeführt sein, welches mit dem Zwischenelement verbunden ist, beispielsweise vernietet. Dabei ist es auch möglich, unterschiedliche Materialien für die Dichtung zu verwenden als für das Zwischenelement selbst.

In besonders günstiger Ausbildung der Erfindung ist vorgesehen, dass das Zwischenelement aus einem feuerfesten Material gefertigt ist. So kann beispielsweise ein Gewebe in das elastische Material eingelegt oder auf diesem befestigt werden.

Weiterhin kann das Zwischenelement erfindungsgemäß an seiner Außenseite mit einem zusätzlichen Dichtelement versehen werden, welches gegen eine Innenfläche des äußeren Gehäuses dichtend zur Anlage kommt. Dieses Dichtelement kann einstückig mit dem Zwischenelement ausgebildet sein, beispielsweise in Form einer ringförmig umlaufenden Dichtlippe oder eines geschlossenen Dichtungsprofils, beispielsweise P- oder D-förmig. Es ist jedoch auch möglich, ein separates, ringförmiges Dichtelement zwischen das Zwischenelement und das äußere Gehäuse einzubringen. Hierdurch erfolgt insbesondere eine Flüssigkeitsabdichtung.

Das erfindungsgemäße Zwischenelement kann, wie auch der Strömungskanal, mit unterschiedlichen Querschnitten ausgebildet sein, beispielsweise kreisrund, elliptisch, rechteckig oder in beliebiger anderer Form. In jedem Fall wird die aerodynamische Form des Zwischenelements während des Herstellungsvorgangs des Zwischenelements ausgebildet, wobei eine ausreichende Dicke der Dichtwulst am Einströmbereich des Zwischenelements vorgesehen sein kann. Das Zwischenelement kann im montierten Zustand entweder durch die Elastizität der einzelnen Dichtungen in dem Gehäuse gehalten sein, es ist auch möglich, dieses mit dem Innenbereich des Gehäuses zu verkleben. Gleiches gilt für den Übergang zwischen dem Zwischenelement und dem Strömungskanal.

Durch die einfache Herstellbarkeit des erfindungsgemäßen Zwischenelements ist es möglich, unterschiedliche Ausgestaltungen von Dichtungen vorzusehen, beispielsweise P- oder D-Dichtungen, mit oder ohne Hohlräume. Die Dichtungen können mit einer oder mit mehreren Dichtlippen versehen werden. Weiterhin ist es möglich, separate Dichtringe oder Dichtflansche oder ähnliches in dem Zwischenelement zu integrieren.

Die Elastizität des Materials des Zwischenelements ist ausreichend, um Lageveränderungen zwischen dem Strömungskanal und dem äußeren Gehäuse auszugleichen. Dabei wird das Material des Zwischenelements nicht oder nur sehr geringfügig beansprucht. Die Strömungsverhältnisse ändern sich durch die geringfügigen Verformungen des Zwischenelementes nicht. Somit ergibt sich ein guter Wirkungsgrad des erfindungsgemäßen Luftleitelements.

Im Folgenden wird die Erfindung anhand von Ausführungsbeispielen in Verbindung mit der Zeichnung beschrieben. Dabei zeigt:
- Fig. 1: eine schematische Schnitt-Seitenansicht eines ersten Ausführungsbeispiels,
- Fig. 2: eine Ansicht, analog Fig. 1 eines modifizierten Ausführungsbeispiels,
- Fig. 3: ein weiteres Ausführungsbeispiel in Darstellung analog zu Fig. 2,
- Fig. 4: eine schematische Ansicht der Wirkungsweise des erfindungsgemäßen Zwischenelements, und
- Fig. 5: ein Gasturbinentriebwerk zur Verwendung der Erfindung.

In den folgenden Ausführungsbeispielen werden gleiche Teile mit gleichen Bezugsziffern versehen.

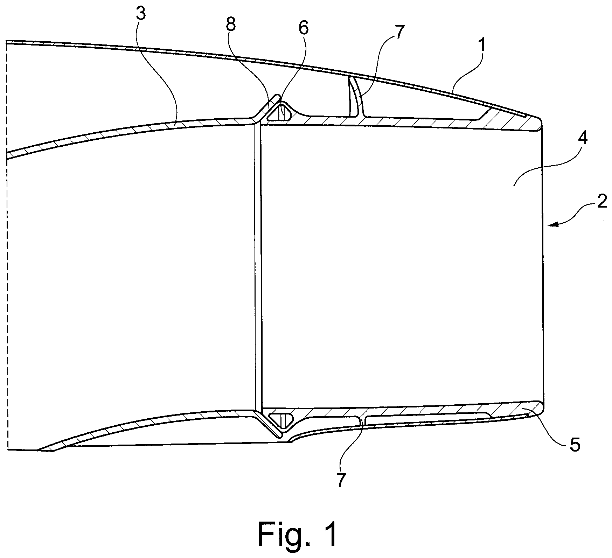

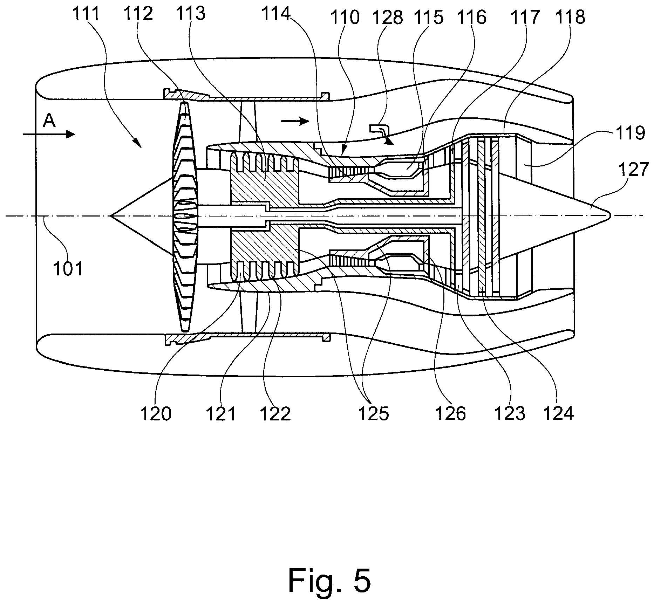

Die Fig. 1 zeigt eine vereinfachte Schnitt-Teilansicht eines erfindungsgemäßen Luftleitelements 128 (siehe Fig. 5). Der grundsätzliche Aufbau und die grundsätzliche Wirkungsweise sind in der DE 10 2009 011 635 A1 beschrieben. Auf diese Druckschrift wird vollinhaltlich Bezug genommen.

Das äußere Gehäuse 1 ist aus einem Blechmaterial gefertigt, beispielsweise aus Aluminium oder Titan und/oder glasfaserverstärktem Kunststoff oder ähnlichen geeigneten Materialien. Das äußere Gehäuse 1 weist eine Einströmöffnung 2, durch welche (von rechts gemäß der Darstellung in Fig. 1) eine Strömung, beispielsweise aus einem Nebenstromkanal, eingeleitet wird. Erfindungsgemäß können zwei, drei oder mehrere Luftleitelemente 128 mit zugehörigen Verrohrungen vorgesehen sein.

Erfindungsgemäß ist ein rohrförmiges Zwischenelement 4 vorgesehen, welches aus einem elastischen Material gefertigt ist. An dem Einströmbereich weist das Zwischenelement 4 eine Dichtwulst 5 auf, welche einen verstärkten Querschnitt aufweist und fest mit dem Randbereich der Einströmöffnung 2 des äußeren Gehäuses 1 verbunden ist, beispielsweise verklebt oder vulkanisiert.

Das erfindungsgemäße Zwischenelement 4 erstreckt sich über einen Teil der Länge des äußeren Gehäuses 1 und schließt sich an einen Strömungskanal 3 an, welcher beispielsweise als starres Rohr ausgebildet ist.

An dem Übergangsbereich weist der Strömungskanal 3 eine Aufweitung 8 auf, welche trichterförmig ausgebildet ist. Gegen diese Aufweitung 8 liegt der Endbereich des Zwischenelements 4 an. In diesem Bereich ist eine Dichtung vorgesehen. Diese wird bei dem Ausführungsbeispiel der Fig. 1 als umlaufende, hohle Dichtwulst realisiert. Diese liegt gegen die Aufweitung an und kann mit dieser auch verbunden sein, beispielsweise durch Klebung.

Im mittleren Bereich ist das Zwischenelement 4 mit einem einstückig mit diesem ausgebildeten Dichtelement 7 versehen, welches als Dichtlippe ausgestaltet ist und gegen die Innenseite des äußeren Gehäuses 1 anliegt.

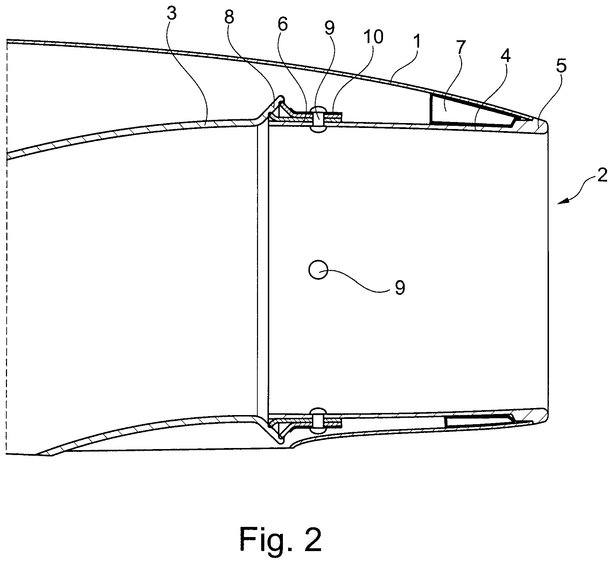

Bei dem Ausführungsbeispiel der Fig. 2 ist die Dichtung 6 als separate Ringdichtung ausgebildet, welche mittels Niete 9 mit dem Zwischenelement 4 verbunden ist. Dabei kann eine zusätzliche, zweite Dichtung 6 eingelegt werden, bei dem gezeigten Ausführungsbeispiel wird die Anordnung der Dichtungen 6 mittels eines Rings 10 gehalten.

Im mittleren Bereich weist das Zwischenelement ein ringförmiges Dichtelement 7 auf, welches starr oder porös ausgebildet sein kann und als Flüssigkeitsdichtung wirkt.

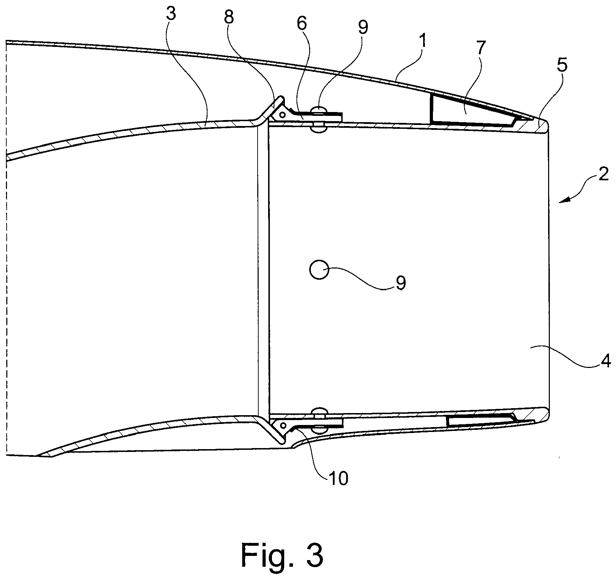

Das Ausführungsbeispiel gemäß Fig. 3 unterscheidet sich von dem Ausführungsbeispiel der Fig. 2 in der Ausgestaltung der Dichtung 6. Diese ist ebenfalls mittels eines Rings 10 vernietet, jedoch mit einem dickeren Querschnitt versehen, sodass sich eine flächigere Anlage an die Aufweitung 8 des Strömungskanals 3 ergibt.

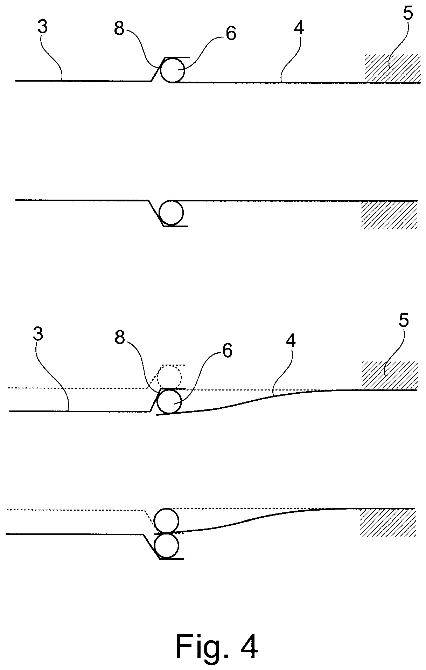

Die Fig. 4 zeigt in schematischer Darstellung zwei Betriebszustände des erfindungsgemäßen Luftleitelements im montierten Zustand. In der oberen Darstellung der Fig. 4 ist eine exakt axial ausgerichtete Anordnung gezeigt, bei welcher die Mittelachsen des Zwischenelements 4 und des Strömungskanals 3 (nicht gezeigt) miteinander fluchten. In Fig. 4 ist ein Betriebszustand gezeigt, bei welchem eine geringfügige radiale Versetzung des Strömungskanals 3 vorliegt. Durch die Elastizität des erfindungsgemäßen Zwischenelements 4 ist es möglich, diese Versetzung ohne Strömungsverlust und ohne Beeinträchtigung der Dichtfunktion der Dichtung 6 auszugleichen. Das Zwischenelement 4 ist im Bereich seiner Dichtwulst 5 an dem nicht dargestellten Gehäuse 1 gelagert.

Aus den oben beschriebenen Ausführungsbeispielen ergibt sich, dass das erfindungsgemäße Zwischenelement in einfacher Weise montierbar und demontierbar ist. Weiterhin führt die Verwendung eines elastischen gummiartigen Materials des Zwischenelements dazu, dass direkte Materialkontakte zwischen dem äußeren Gehäuse 1 und dem Strömungskanal 3 vermieden werden, beispielsweise ein Kontakt zwischen Aluminium und einem Komposit-Bauteil oder zwischen Titan und einem anderen metallischen Bauteil.

Das Gasturbinentriebwerk 110 gemäß Fig. 5 ist ein allgemein dargestelltes Beispiel einer Turbomaschine, bei der die Erfindung Anwendung finden kann. Das Triebwerk 110 ist in herkömmlicher Weise ausgebildet und umfasst in Strömungsrichtung hintereinander einen Lufteinlass 111, einen in einem Gehäuse umlaufenden Fan 112, einen Mitteldruckkompressor 113, einen Hochdruckkompressor 114, eine Brennkammer 115, eine Hochdruckturbine 116, eine Mitteldruckturbine 117 und eine Niederdruckturbine 118 sowie eine Abgasdüse 119, die sämtlich um eine zentrale Triebwerksmittelachse 101 angeordnet sind.

Der Mitteldruckkompressor 113 und der Hochdruckkompressor 114 umfassen jeweils mehrere Stufen, von denen jede eine in Umfangsrichtung verlaufende Anordnung fester stationärer Leitschaufeln 120 aufweist, die allgemein als Statorschaufeln bezeichnet werden und die radial nach innen vom Kerntriebwerksgehäuse 121 in einen ringförmigen Strömungskanal durch die Kompressoren 113, 114 vorstehen. Die Kompressoren weisen weiter eine Anordnung von Kompressorlaufschaufeln 122 auf, die radial nach außen von einer drehbaren Trommel oder Scheibe 125 vorstehen, die mit Naben 126 der Hochdruckturbine 116 bzw. der Mitteldruckturbine 117 gekoppelt sind.

Die Turbinenabschnitte 116, 117, 118 weisen ähnliche Stufen auf, umfassend eine Anordnung von festen Leitschaufeln 123, die radial nach innen vom Gehäuse 121 in den ringförmigen Strömungskanal durch die Turbinen 116, 117, 118 vorstehen, und eine nachfolgende Anordnung von Turbinenschaufeln 124, die nach außen von einer drehbaren Nabe 126 vorstehen. Die Kompressortrommel oder Kompressorscheibe 125 und die darauf angeordneten Schaufeln 122 sowie die Turbinenrotornabe 126 und die darauf angeordneten Turbinenlaufschaufeln 124 drehen sich im Betrieb um die Triebwerksmittelachse 101.

Die Figur 5 zeigt die Anordnung des erfindungsgemäßen Luftleitelements 128.

### Bezugszeichenliste:

- 1: äußeres Gehäuse
- 2: Einströmöffnung
- 3: Strömungskanal
- 4: Zwischenelement
- 5: Dichtwulst
- 6: Dichtung
- 7: Dichtelement
- 8: Aufweitung
- 9: Niet
- 10: Ring
- 101: Triebwerksmittelachse
- 110: Gasturbinentriebwerk / Kerntriebwerk
- 111: Lufteinlass
- 112: Fan
- 113: Mitteldruckkompressor (Verdichter)
- 114: Hochdruckkompressor
- 115: Brennkammer
- 116: Hochdruckturbine
- 117: Mitteldruckturbine
- 118: Niederdruckturbine
- 119: Abgasdüse
- 120: Leitschaufeln
- 121: Kerntriebwerksgehäuse
- 122: Kompressorlaufschaufeln
- 123: Leitschaufeln
- 124: Turbinenschaufeln
- 125: Kompressortrommel oder -scheibe
- 126: Turbinenrotornabe
- 127: Auslasskonus
- 128: Luftleitelement

## Patentansprüche

1. Vollintegriertes Luftleitelement einer Fluggasturbine, das mit einem äußeren Gehäuse (1) versehen ist, welches mit einer Einströmöffnung (2) versehen ist, sowie mit einem in dem Gehäuse (1) angeordneten Strömungskanal (3), **dadurch gekennzeichnet, dass** in der Einströmöffnung (2) ein rohrförmiges, aus einem elastischen Material gefertigtes Zwischenelement (4) angeordnet ist, welches die Einströmöffnung (2) dichtend und lagejustierend mit dem Strömungskanal (3) verbindet, wobei das Zwischenelement (4) an seinem in Strömungsrichtung vorderen Bereich mit einer ringartigen Dichtwulst (5) versehen ist, welche fest mit dem vorderen Randbereich des äußeren Gehäuses (1) verbunden ist und wobei am hinteren Endbereich des Zwischenelements (4) eine ringförmige, gegen eine Aufweitung (8) des Strömungskanals (3) anliegende Dichtung (6) angeordnet ist, welche zumindest eine Dichtlippe aufweist.

2. Luftleitelement nach Anspruch 1, **dadurch gekennzeichnet, dass** die Dichtung (6) einstückig mit dem Zwischenelement (4) oder als separates Bauteil ausgebildet ist.

3. Luftleitelement nach einem der Ansprüche 1 oder 2, **dadurch gekennzeichnet, dass** angrenzend an die Dichtwulst (5) an der Außenseite des Zwischenelements (4) ein Dichtelement (7) zur Anlage an die Innenseite des Gehäuses (1) vorgesehen ist.

4. Luftleitelement nach Anspruch 3, **dadurch gekennzeichnet, dass** das Dichtelement (7) einstückig mit dem Zwischenelement (4) ausgebildet ist.

5. Luftleitelement nach Anspruch 3, **dadurch gekennzeichnet, dass** das Dichtelement (7) als separates Bauteil ausgebildet ist.

6. Luftleitelement nach einem der Ansprüche 1 bis 5, **dadurch gekennzeichnet, dass** das Zwischenelement (4) aus einem feuerfesten Material gefertigt ist.

## Claims

1. Fully integrated air-guiding element of an aircraft gas turbine, including an external casing (1) that is provided with an inflow opening (2), as well as a flow duct (3) arranged inside the casing (1), **characterized in that** a tubular intermediate element (4) made of an elastic material is arranged inside the inflow opening (2), said intermediate element connecting the inflow opening (2) to the flow duct (3) in a sealing and position-adjusting manner, wherein the intermediate element (4), at its front area as seen in the flow direction, is provided with a ring-like sealing bead (5), which is firmly connected to the front edge area of the external casing (1), and wherein at the back end area of the intermediate element (4), a ring-shaped seal (6) is arranged that abuts against a bulging (8) of the flow duct (3), said seal comprising at least one sealing lip.

2. Air-guiding element in accordance with Claim 1, **characterized in that** the seal (6) is made in one piece with the intermediate element (4) or as a separate component.

3. Air-guiding element in accordance with one of the Claims 1 or 2, **characterized in that** a sealing element (7) is provided for abutment against the inner side of the casing (1), said sealing element adjoining the sealing bead (5) at the outer side of the intermediate element (4).

4. Air-guiding element in accordance with Claim 3, **characterized in that** the sealing element (7) is made in one piece with the intermediate element (4).

5. Air-guiding element in accordance with Claim 3, **characterized in that** the sealing element (7) is made as a separate component.

6. Air-guiding element in accordance with one of the Claims 1 to 5, **characterized in that** the intermediate element (4) is made of a fire-resistant material.

## Revendications

1. Élément de guidage d'air entièrement intégré d'une turbine à gaz aéronautique, comprenant un carter extérieur (1) pourvu d'un orifice d'admission (2), ainsi qu'un canal de flux (3) disposé dans le carter (1), **caractérisé en ce qu'**un élément intermédiaire (4) en forme de tube et constitué d'un matériau élastique est disposé dans l'orifice d'admission (2), lequel élément intermédiaire relie l'orifice d'admission (2) au canal de flux (3) d'une manière étanche et ajustant la position, sachant que l'élément intermédiaire (4) est pourvu, dans sa partie avant dans le sens d'écoulement, d'un bourrelet d'étanchéité (5) en forme d'anneau, qui est relié de manière fixe à la partie marginale avant du carter extérieur (1) et sachant qu'est disposé, sur l'extrémité arrière de l'élément intermédiaire (4), un joint (6) de forme annulaire, reposant contre un élargissement (8) du canal de flux (3), lequel joint présente au moins une lèvre d'étanchéité.

2. Élément de guidage d'air selon la revendication n° 1, **caractérisé en ce que** le joint (6) forme une seule pièce avec l'élément intermédiaire (4) ou est conçu sous forme de composant séparé.

3. Élément de guidage d'air selon une des revendications n° 1 ou n° 2, **caractérisé en ce qu'**un élément d'étanchéité (7) destiné à s'appuyer sur la face intérieure du carter (1) est prévu au voisinage du bourrelet d'étanchéité (5) sur le côté extérieur de l'élément intermédiaire (4).

4. Élément de guidage d'air selon la revendication n° 3, **caractérisé en ce que** l'élément d'étanchéité (7) forme une seule pièce avec l'élément intermédiaire (4).

5. Élément de guidage d'air selon la revendication n° 3, **caractérisé en ce que** l'élément d'étanchéité (7) est conçu sous forme de composant séparé.

6. Élément de guidage d'air selon une des revendications n° 1 à n° 5, **caractérisé en ce que** l'élément intermédiaire (4) est fabriqué dans un matériau réfractaire.
